# EUROPÄISCHE PATENTANMELDUNG

(11) **EP 2 111 733 A1**
(43) Veröffentlichungstag der Anmeldung: **28.10.2009**
(21) Anmeldenummer: 09005569.0
(22) Anmeldetag: 21.04.2009
(51) Int. Cl.: A01B 33/06

(54) **Bodbenbearbeitungsmaschine**

(30) Priorität: 25.04.2008 DE 102008020901
(71) Anmelder: Amazonen-Werke H. Dreyer GmbH & Co. KG, 49205 Hasbergen (DE)
(72) Erfinder: Gieseke, Reinhard, 27798 Hude (DE); Tiessen, Reimer Uwe, 26135 Oldenburg (DE)

(57) **Zusammenfassung**

Bodenbearbeitungsmaschine (1) mit einem sich quer zur Fahrtrichtung (2) erstreckenden Kastenbalken (3), in dem beabstandet zueinander um aufrechte Achsen rotierend angetriebene Bodenbearbeitungswerkzeuge (9) tragende Werkzeugkreisel (8) in Lagerhülsen (4) angeordnet sind, wobei unterhalb des Kastenbalkens ein einen sich in Längsrichtung des Kastenbalkens erstreckender Hohlraum bildender und den Kastenbalken verstärkender Profilträger (12), der mit dem Kastenbalken verschweißt ist, angeordnet ist, wobei die Lagerhülsen in den Boden des Kastenbalkens und in dem Profilträger angeordneten Aussparungen (13) angeordnet und mit dem Kastenbalken und dem Profilträger verschweißt sind. Um eine einfachere Ausgestaltung des dem Hohlraum unterhalb des Kastenbalkens bildende Profilträger mit einer guten Krafteinleitung aus den Lagerhülsen in den Profilträgern zu erreichen. Diese Aufgabe wird erfindungsgemäß dadurch gelöst, dass der Profilträger im Querschnitt V-förmig ausgebildet ist, dass die Aussparungen für die Lagerhülsen in dem keilförmigen Bereich (14) des V-förmigen Profilträgers angebracht sind. Infolge dieser Maßnahmen wird in überraschend einfacher Weise eine vorteilhafte Einleitung der Kräfte, die über die Lagerhülse in den Kastenbalken eingeleitet werden, in optimal verteilter und vorteilhafter Weise eingeleitet. Es kommt zu keinen Kraftspitzen im Bereich des Profils, insbesondere nicht im Bereich der mit der Lagerhülse verschweißt ist, ist vorgesehen, dass der Profilträger im Querschnitt V-förmig ausgebildet ist, dass die Aussparungen für die Lagerhülsen in dem keilförmigen Bereich des V-förmigen Profilträgers angebracht sind.

## Beschreibung

Die Erfindung betrifft eine Bodenbearbeitungsmaschine gemäß des Oberbegriffes des Patentanspruches 1.

Eine derartige Bodenbearbeitungsmaschine ist beispielsweise durch den Prospekt Amazone KE mit Druckvermerk MI 1207/D 709 (D) 10.06 bekannt. Bei dieser Ausgestaltung weist der unterhalb des Kastenbalkens angeordnete Profilträger auf seiner Vorder- und Rückseite jeweils zur Mitte der Maschine schräg nach unten verlaufende Vorder- und Rückwand sowie eine die Vorder- und Rückwand verbindende horizontal verlaufende Bodenwand auf, in welcher Aussparungen angeordnet sind, in denen die Profilhülsen angeordnet sind. Diese Aussparungen weisen nach unten durchgedrückte kreisförmige Kragenelemente auf, deren unterer Rand mit der Lagerhülse verschweißt ist. Diese Ausgestaltung ist relativ aufwendig.

Ähnliche Ausgestaltungen sind durch die DE 42 15 885 A1 bekannt.

Der Erfindung liegt die Aufgabe zugrunde, eine einfachere Ausgestaltung des den Hohlraum unterhalb des Kastenbalkens bildenden Profilträger mit einer guten Krafteinleitung aus den Lagerhülsen in den Profilträgern zu erreichen.

Diese Aufgabe wird erfindungsgemäß dadurch gelöst, dass der Profilträger im Querschnitt V-förmig ausgebildet ist, dass die Aussparungen für die Lagerhülsen in dem keilförmigen Bereich des V-förmigen Profilträgers angebracht sind. Infolge dieser Maßnahmen wird in überraschend einfacher Weise eine vorteilhafte Einleitung der Kräfte, die über die Lagerhülse in den Kastenbalken eingeleitet werden, in optimal verteilter und vorteilhafter Weise erreicht. Es kommt zu keinen Kraftspitzen im Bereich des Profilträgers, insbesondere nicht in dem mit der Lagerhülse verschweißten Bereich ist. Somit wird also eine verbesserte Krafteinleitung von den Lagerhülsen in den den Kastenbalken verstärkenden Profilträger in einfacher und Material sparender Weise erreicht. Auch ergibt sich eine einfachere Herstellung des Profilträgers.

Eine vorteilhafte Ausrichtung der Flächen des V-förmigen Profilträgers wird dadurch erreicht, dass die V-förmig zueinander angeordneten Flächen des Profilträgers in einem Winkel von 120° bis 140°, vorzugsweise etwa 130° zueinander angeordnet sind und geradlinig bis zum unteren keilförmigen Bereich aufeinander zulaufen.

Eine vorteilhafte und einfache Anordnung der Aussparungen für die Lagerhülsen in dem Profilträger bei guter Krafteinleitung lässt sich dadurch erreichen, dass die Aussparungen für die Lagerhülsen in dem Profilträger in den V-förmig zueinander angeordneten Flächen des Profilträges angeordnet sind.

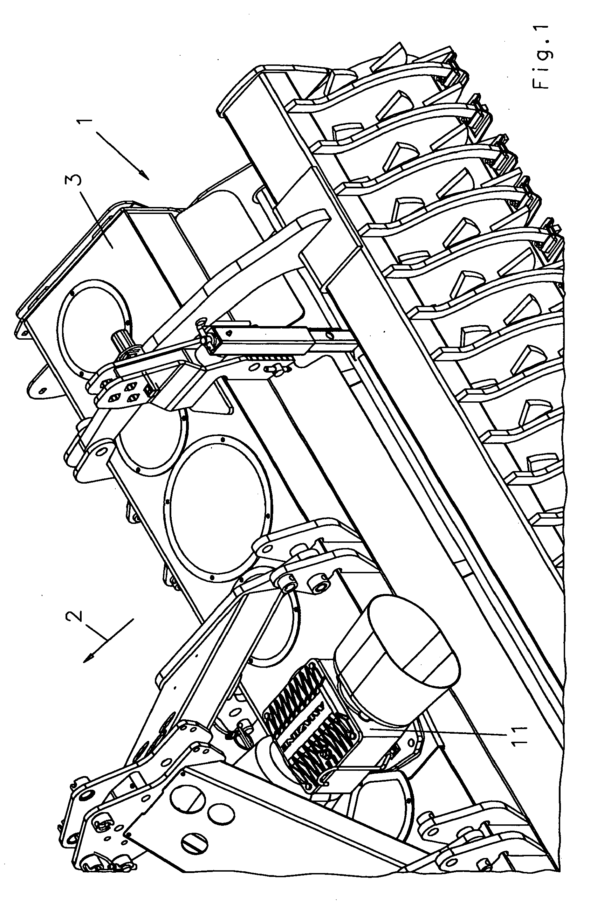

Weitere Einzelheiten der Erfindung sind der Beispielsbeschreibung und den Zeichnungen zu entnehmen. Hierbei zeigen
- Fig. 1: die als Kreiselegge ausgebildete Bodenbearbeitungsmaschine in perspektivischer Ansicht schräg von hinten und in Teilansicht,

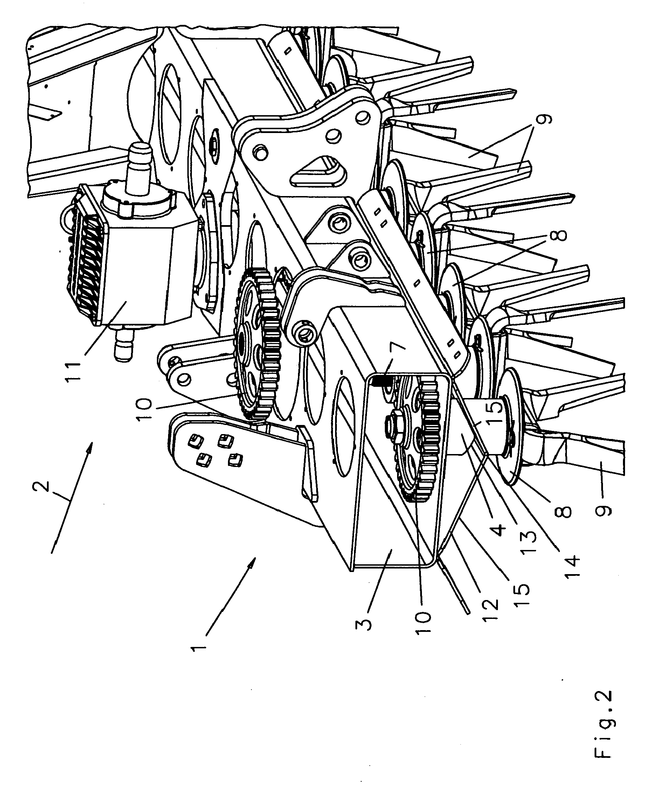

- Fig. 2: die Kreiselegge in perspektivischer Ansicht schräg von vorne und in halbfertiger Montage,

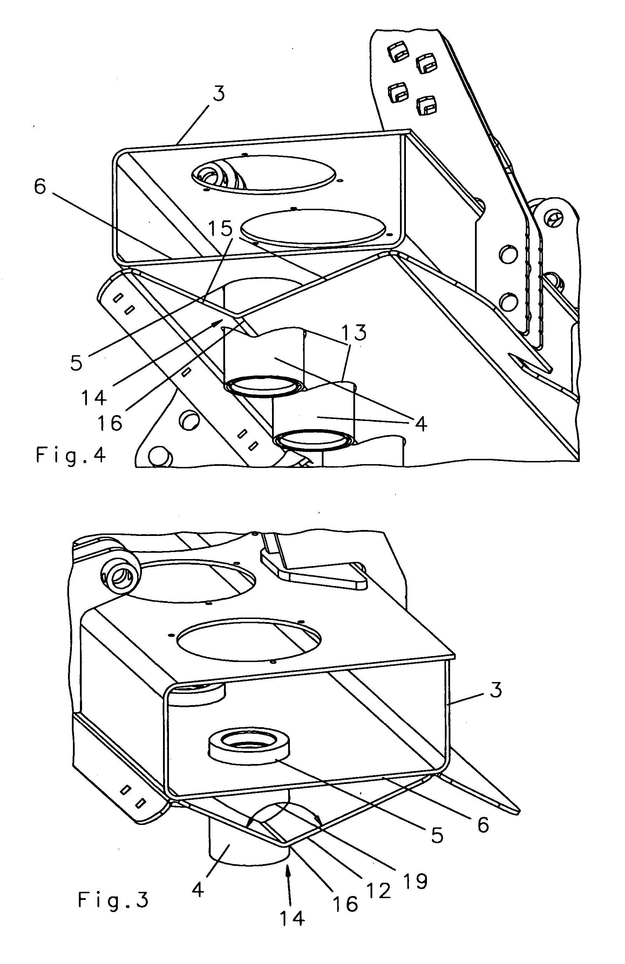

- Fig. 3: den Kastenbalken der Kreiselegge in perspektivischer Ansicht seitlich von vorne und
- Fig. 4: den Kastenbalken der Kreiselegge in seitlicher Ansicht schräg von hinten unten.

Die Bodenbearbeitungsmaschine 1 ist als Kreiselegge ausgebildet und weist den sich quer zur Fahrtrichtung 2 erstreckenden Kastenbalken 3 auf. In dem Kastenbalken 3 sind die Lagerhülsen 4 in Aussparungen 5, die im Boden 6 des Kastenbalkens 3 angeordnet sind, beabstandet zueinander eingeschweißt. In diesen Lagerhülsen 4 sind die beabstandet zueinander und um aufrechte Achsen rotierend angetriebenen Kreiselwellen 7 der Werkzeugkreisel 8, die die als Zinken 9 ausgebildeten Bodenbearbeitungswerkzeuge tragen angeordnet. Auf dem oberen Ende der Kreiselwellen 7 sind jeweils formschlüssig die miteinander kämmenden Stirnräder 10 angeordnet, die in bekannter Weise über ein Antriebsritzel eines zentralen Getriebes 11 von einer Kraftquelle, beispielsweise über eine Zapfwelle von einem die Kreiselegge 1 tragenden Ackerschlepper angetrieben werden.

Unterhalb des Kastenbalkens 3 ist ein ein sich in Längsrichtung des Kastenbalkens 3 erstreckender und einen Hohlraum bildender und den Kastenbalken 3 verstärkender Profilträger 12 angeordnet. Dieser Profilträger 12 ist mit dem Kastenbalken 3 verschweißt. Der Profilträger 12 weist ebenso wie der Boden 6 des Kastenbalkens 3 Ausspaarungen 13 auf, in dem die Lagerhülsen 4 angeordnet sind. Die Lagerhülsen 4 sind sowohl mit dem Profilträger 12 wie mit dem Boden 6 des Kastenbalkens 3 verschweißt.

Der Profilträger 12 ist, wie die Zeichnungen zeigen, im Querschnitt v-förmig ausgebildet. Die Ausspaarungen 13 für die Lagerhülsen 4 sind in dem keilförmigen Bereich 14 des Profilträgers 12 angebracht, und zwar in dem Bereich, in dem der keilförmige Bereich 14 der Flächen 15 des Profilträgers 12 mit seiner Spitze 16 nach unten weisen.

Die v-förmig zueinander angeordneten Flächen 15 des Profilträgers 12 sind in einem Winkel A von 120° bis 140°, vorzugsweise etwa 130° zueinander angeordnet. Die v-förmig zueinander angeordneten Flächen 15 des Profilträgers 12 sind geradlinig verlaufend ausgebildet und verlaufen von der vorderen bzw. der hinteren unteren Seite des Kastenbalkens 3 geradlinig bis zum keilförmigen unteren Bereich 14 des Profilträgers 12.

Die Ausspaarungen 13 für die Lagerhülsen 4 in dem Profilträger 12 sind in dem v-förmig zueinander angeordneten Flächen 15 des Profilträgers 12 und zwar in dem keilförmigen Bereich 14 angeordnet.

## Patentansprüche

1. Bodenbearbeitungsmaschine mit einem sich quer zur Fahrtrichtung erstreckenden Kastenbalken, in dem beabstandet zueinander um aufrechte Achsen rotierend angetriebene Bodenbearbeitungswerkzeuge tragende Werkzeugkreisel in Lagerhülsen angeordnet sind, wobei unterhalb des Kastenbalkens ein einen sich in Längsrichtung des Kastenbalkens erstreckender Hohlraum bildender und den Kastenbalken verstärkender Profilträger, der mit dem Kastenbalken verschweißt ist, angeordnet ist, wobei die Lagerhülsen in den Boden des Kastenbalkens und in dem Profilträger angeordneten Aussparungen angeordnet und mit dem Kastenbalken und dem Profilträger verschweißt sind, **dadurch gekennzeichnet, dass** der Profilträger (12) im Querschnitt V-förmig ausgebildet ist, dass die Aussparungen (13) für die Lagerhülsen (4) in dem keilförmigen Bereich (14) des V-förmigen Profilträgers (12) angebracht sind.

2. Bodenbearbeitungsmaschine nach Anspruch 1, **dadurch gekennzeichnet, dass** die V-förmig zueinander angeordneten Flächen (15) des Profilträgers (12) in einem Winkel A von 120° bis 140°, vorzugsweise etwa 130° zueinander angeordnet sind und geradlinig bis zum unteren keilförmigen Bereich (14) aufeinander zulaufen.

3. Bodenbearbeitungsmaschine nach Anspruch 1, **dadurch gekennzeichnet, dass** die Aussparungen (13) für die Lagerhülsen (4) in dem Profilträger (12) in den V-förmig zueinander angeordneten Flächen (15) des Profilträges (12) angeordnet sind.
Anzahl Anhängende Zeichnungen: [4]
